# EUROPÄISCHE PATENTSCHRIFT

(11) **EP 3 176 495 B1**
(45) Veröffentlichungstag und Bekanntmachung des Hinweises auf die Patenterteilung: **12.05.2021**
(21) Anmeldenummer: 16201859.2
(22) Anmeldetag: 02.12.2016
(51) Int. Cl.: B60Q 1/26, B60Q 1/38, F21S 43/14, F21S 43/19, F21S 43/237, F21S 43/239, F21S 43/245, F21S 43/249, F21V 8/00

(54) **BELEUCHTUNGSEINRICHTUNG FÜR EIN KRAFTFAHRZEUG**
LIGHTING DEVICE FOR A MOTOR VEHICLE
DISPOSITIF D'ÉCLAIRAGE DE VÉHICULE AUTOMOBILE

(30) Priorität: 02.12.2015 DE 202015008369 U
(43) Veröffentlichungstag der Anmeldung: 07.06.2017
(73) Patentinhaber: Automotive Lighting Reutlingen GmbH, 72762 Reutlingen (DE)
(72) Erfinder: Maurer, Bernhard, 72766 Reutlingen (DE); Hlawon, Herbert, 72800 Eningen (DE)
(74) Vertreter: DREISS Patentanwälte PartG mbB

(56) Entgegenhaltungen:
- EP-A2- 1 391 755
- DE-A1-102005 048 498
- DE-A1-102011 055 430
- DE-A1-102013 101 198
- JP-A- 2002 368 279
- JP-A- 2005 005 211
- JP-A- 2011 090 903
- KR-B1- 100 782 797

## Beschreibung

Die vorliegende Erfindung betrifft eine Beleuchtungseinrichtung für ein Kraftfahrzeug nach dem Oberbegriff des Anspruchs 1.

Eine solche Beleuchtungseinrichtung ist aus der DE 10 2005 048 498 A1 bekannt.

Grundsätzlich sollte der Abstand zwischen der Lichtaustrittsfläche einer Halbleiterlichtquelle und der Lichteintrittsfläche des Lichtleiters möglichst gering sein, damit möglichst viel Licht der Halbleiterlichtquelle in den Lichtleiter eintritt. Andererseits sollte wegen des Ziels einer möglichst langen Lebensdauer ein Abstand eingehalten werden, bei dem eine frühe Alterung des Lichtleitermaterials vermieden wird. In der Regel besteht der Lichtleiter aus transparentem Kunststoff, der durch Wärmeeinwirkung altert. Die Alterung macht sich in einer Verfärbung und/oder Eintrübung bemerkbar. Beides ist unerwünscht. Die Alterung wird durch Strahlungswärme der im Betrieb um die 100° C heißen Halbleiterlichtquellen beschleunigt.

Die Aufgabe der Erfindung besteht darin, eine frühzeitige Alterung des Lichtleiters zu verhindern. Diese Aufgabe wird mit den Merkmalen des Anspruchs 1 gelöst. Von dem eingangs genannten Stand unterscheidet sich die Erfindung durch die kennzeichnenden Merkmale des Anspruchs 1. Diese sehen vor, dass die erste Halbleiterlichtquelle zur Erzeugung einer ersten Lichtverteilung dient, mit der die erste Lichtfunktion erfüllt wird und dass die zweite Halbleiterlichtquelle zur Erzeugung einer zweiten Lichtverteilung dient, mit der die zweite Lichtfunktion erfüllt wird und dass der Abstand derjenigen Lichtaustrittsfläche der kleinere Abstand ist, deren zugehörige Halbleiterlichtquelle der Erzeugung derjenigen Lichtverteilung dient, bei deren Erzeugung im zeitlichen Mittel weniger Wärme in der zugehörigen Halbleiterlichtquelle frei wird.

Die Erfindung berücksichtigt den Umstand, dass bei Mehrfunktionslichtleitern, wie sie zum Beispiel bei dem obengenannten Stand der Technik verwendet werden, unterschiedliche Halbleiterlichtquellen zum Einsatz kommen, die in ihrem Betrieb unterschiedlich viel Wärme abstrahlen. Durch den unterschiedlichen Abstand erlaubt es die Erfindung, die Erfüllung der Forderungen nach einem für die Lichteinkopplung möglichst kleinen Abstand und einem für die Vermeidung einer frühzeitigen Alterung günstigeren großen Abstand für die erste Halbleiterlichtquelle anders zu gewichten als für die zweite Halbleiterlichtquelle.

Eine bevorzugte Ausgestaltung zeichnet sich dadurch aus, dass der erste Bereich der Lichteintrittsfläche mit dem zweiten Bereich der Lichteintrittsfläche in einer gemeinsamen Ebene liegt.

Bevorzugt ist auch, dass die erste Halbleiterlichtquelle und die zweite Halbleiterlichtquelle auf einer ebenen Leiterplatte angeordnet sind und dass die erste Halbleiterlichtquelle direkt auf der Leiterplatte befestigt ist und die zweite Halbleiterlichtquelle über eine zwischen der zweiten Halbleiterlichtquelle und der Leiterplatte angeordnete Unterlage auf der Leiterplatte befestigt ist.

Außerdem ist bevorzugt, dass eine der Lichteintrittsfläche zugewandte Oberfläche der Leiterplatte eine erste Teilebene und eine zweite Teilebene aufweist, wobei sich die zweite Teilebene in der Richtung, in der die Lichteintrittsfläche des Lichtleiters, von der Leiterplatte aus betrachtet, vor der Leiterplatte liegt, weiter vorn befindet als die erste Teilebene, und dass die erste Halbleiterlichtquelle auf der ersten Teilebene befestigt ist und die zweite Halbleiterlichtquelle auf der zweiten Teilebene befestigt ist.

Eine weitere bevorzugte Ausgestaltung zeichnet sich dadurch aus, dass die erste Halbleiterlichtquelle eine in der Lichtabstrahlrichtung von einer Bauhöhe der zweiten Halbleiterlichtquelle verschiedene Bauhöhe aufweist.

Bevorzugt ist auch, dass der erste Bereich der Lichteintrittsfläche des Lichtleiters und der zweite Bereich der Lichteintrittsfläche des Lichtleiters nicht in einer Ebene liegen und dass ein der zweiten Halbleiterlichtquelle zugewandter zweiter Bereich der Lichteintrittsfläche weiter aus dem übrigen Lichtleiter herausragt als ein der ersten Halbleiterlichtquelle zugewandter erster Bereich der Lichteintrittsfläche.

Bevorzugt ist auch, dass die erste Lichtverteilung eine Blinklichtverteilung ist und die zweite Lichtverteilung eine Tagfahrlichtverteilung ist.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, der nur durch die beigelegte Ansprüche limitiert wird.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: das technische Umfeld der Erfindung in Form einer bekannten Kraftfahrzeugbeleuchtungseinrichtung;
- Figur 2: eine Abwandlung des Gegenstandes der Figur 1 als erstes Ausführungsbeispiel der Erfindung;
- Figur 3: eine weitere Abwandlung des Gegenstandes der Figur 1 als zweites Ausführungsbeispiel der Erfindung; und
- Figur 4: eine weitere Abwandlung des Gegenstandes der Figur 1 als weiteres erstes Ausführungsbeispiel der Erfindung.

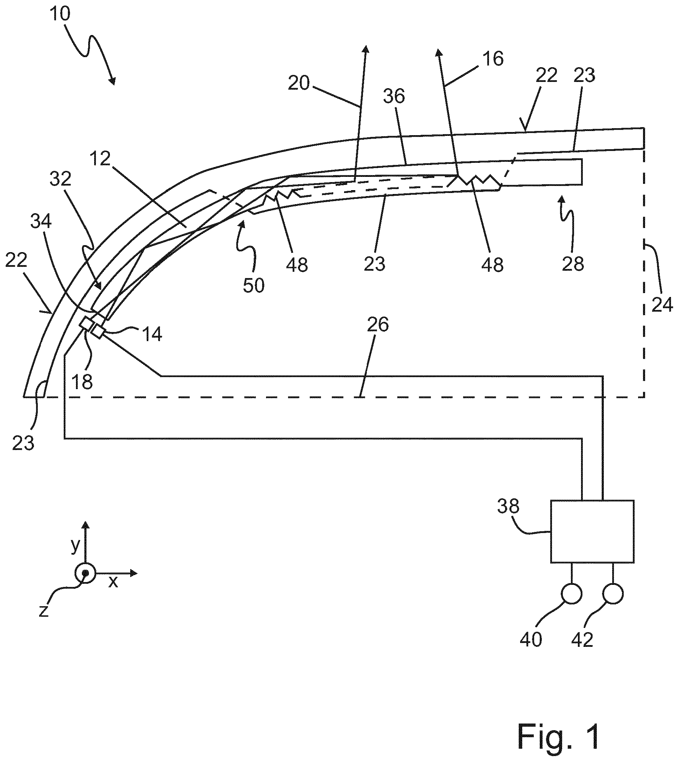

Im Einzelnen zeigt die Fig. 1 eine Kraftfahrzeugbeleuchtungseinrichtung 10 mit einem Lichtleiter 12 und wenigstens einer ersten Lichtquelle 14, die Licht 16 einer ersten Farbe erzeugt, sowie mit wenigstens einer zweiten Lichtquelle 18, die Licht 20 einer zweiten Farbe erzeugt. Die Lichtquellen 14, 18 speisen also Licht 16, 20 verschiedener Farben in den Lichtleiter 12 ein, wobei hier auch weißes Licht als Licht einer bestimmten Farbe verstanden wird.

Der Lichtleiter 12 befindet sich hinter einer farblosen und transparenten Abdeckscheibe 22, die einen Teil des Gehäuses der Kraftfahrzeugbeleuchtungseinrichtung 10 bildet. Die gestrichelten Linien 24, 26 repräsentieren in einer Ausgestaltung ein Gehäuse der Kraftfahrfahrzeugbeleuchtungseinrichtung 10. In diesem Fall dient die Kraftfahrzeugbeleuchtungseinrichtung 10 als separates Bauteil, das nur die mit dem Lichtleiter 12 realisierbaren Lichtfunktionen bereitstellt. In einer anderen Ausgestaltung repräsentieren diese Linien 24, 26 eine Abgrenzung zu weiteren Lichtmodulen, die in einer Kraftfahrzeugbeleuchtungseinrichtung angeordnet sind.

Solche weiteren Lichtmodule dienen bei einem Frontscheinwerfer als Kraftfahrzeugbeleuchtungseinrichtung 10 zum Beispiel zur Erzeugung einer Hauptlichtfunktion wie einer Abblendlichtfunktion und/oder einer Fernlichtfunktion. Bei einer Heckleuchte als Kraftfahrzeugbeleuchtungseinrichtung 10 dienen solche weiteren Lichtmodule zur Erzeugung weiterer Lichtfunktionen wie Rückfahrlicht, Bremslicht, Nebelschlusslicht, usw.

Beim Einbau als Frontscheinwerfer in einem Fahrzeug entsprechen die X-Richtung der Richtung einer Fahrzeugquerachse, die Y-Richtung der Richtung einer Fahrzeuglängsachse und die Z-Richtung der Richtung einer Fahrzeughochachse.

Der durch die Abdeckscheibe 22 einsehbare Bereich des Scheinwerferinnenraums wird durch einen nichttransparenten Abdeckrahmen 23 begrenzt, welcher Öffnungen aufweist, durch die das Licht der Lichtfunktionen hindurchtreten kann oder an denen optische Komponenten angeordnet oder durchgeführt werden.

Die Einspeisung von Licht 16 der ersten Farbe und die Einspeisung des Lichtes 20 der zweiten Farbe erfolgt in die gleiche Richtung. Dazu ist sowohl eine erste Lichtquelle 14 als auch eine zweite Lichtquelle 18 in räumlicher Nachbarschaft am gleichen Ende 32 des Lichtleiters 12 angeordnet, so dass Licht beider Lichtquellen über dieselbe Stirnseite 34 oder allgemeiner, über dieselbe Lichteintrittsfläche in den Lichtleiter 12 eingekoppelt wird. Dabei ist der Abstand der Lichtaustrittsfläche der ersten Lichtquelle 14 von der Lichteintrittsfläche des Lichtleiters gleich dem Abstand der Lichtaustrittsfläche der zweiten Lichtquelle 18 von der Lichteintrittsfläche des Lichtleiters.

Die Lichtquellen 14, 18 liegen hinter einem Abdeckrahmen 23 der Beleuchtungseinrichtung 10. Die Enden 28, 32 des Lichtleiters 12 verlaufen zumindest teilweise hinter dem Abdeckrahmen 23.

Die Enden 28, 32 des Lichtleiters 12 werden an einer Seite durch die Stirnseiten 30, 34 begrenzt. An der anderen Seite werden sie jeweils durch den zwischen ihnen liegenden Abschnitt des Lichtleiters begrenzt, in dem sich die Auskoppelelemente befinden. Die Enden 28, 32 des Lichtleiters leiten das Licht der Lichtquellen zum Auskoppelbereich.

Die Enden 28, 32 besitzen bevorzugt eine glatte Oberfläche, damit in diesem Abschnitt des Lichtleiters möglichst wenig Licht gestreut wird. Gleichzeitig wird durch die Lichtpropagation in den Enden 28, 32 einen Homogenisierung der Ausleuchtung des Lichtleiters durch mehrfache interne Totalreflexion des Lichts erreicht. Dies gilt für sämtliche der in dieser Anmeldung vorgestellten Ausgestaltungen.

In einer bevorzugten Ausgestaltung ist die erste Lichtfarbe 16 eine für ein Begrenzungslicht und für ein Tagfahrlicht zulässige Lichtfarbe wie weiß, während die zweite Lichtfarbe 20 eine für ein Blinklicht zulässige Lichtfarbe wie gelb oder orange ist. Mit dieser Ausgestaltung lässt sich eine Mehrfachnutzung des Lichtleiters 12 der Kraftfahrzeugbeleuchtungseinrichtung 10 für die Lichtfunktionen der Fahrtrichtungsanzeige und des Tagfahrlichtes erzielen. Mit einer zusätzlichen Möglichkeit der Dimmung der für das Tagfahrlicht verwendeten Lichtquellen 14 kann diese Doppelnutzung noch auf eine Dreifachnutzung erweitert werden, bei der das gedimmte Tagfahrlicht als Begrenzungslicht dient.

Die Lichtquellen 14, 18 sind bevorzugt Halbleiterlichtquellen, insbesondere LEDs, die von einer Ansteuer- und Leistungselektronik in Form eines Steuergeräts 38 angesteuert werden. Das Steuergerät 38 kann ein Bestandteil der Kraftfahrzeugbeleuchtungseinrichtung 10 sein oder als separate Komponente außerhalb der Kraftfahrzeugbeleuchtungseinrichtung 10 im Kraftfahrzeug angeordnet sein und weist Schnittstellen 40, 42 auf, über die ein Einschalten und/oder Ausschalten und/oder Dimmen der Lichtquellen 14, 18 vom Fahrer oder von anderen Steuergeräten angefordert werden kann.

Die Halbleiterlichtquellen sind bevorzugt als LED-Module ausgebildet, die eine oder mehrere LED tragen. Auf einem Modul, das mehrere LED trägt können die LED die gleiche Farbe oder unterschiedliche Farben besitzen. Insbesondere können die Einzellichtquellen in Reihen mit entsprechenden Farben angeordnet werden, wobei in einer Reihe LED mit einer Farbe angeordnet sind. Alternativ können die LED bei zwei Farben in einem Schachbrettmuster angeordnet werden.

Die LED sind auf einem Schaltungsträger in Form einer Leiterplatte montiert, auf dem neben den LED auch weitere elektronische Bauteile angeordnet sein können. Die Schaltungsträger sind je nach Montagegeometrie flexibel oder starr ausgebildet. Der Schaltungsträger kann eine oder mehrere Vorrichtungen zur Durchführung der Wärme der LED an einen auf der Rückseite des Schaltungsträgers angeordneten Kühlkörper enthalten. Alternativ kann ein Schaltungsträger mit integriertem Kühlkörper, beispielsweise in Form einer Metallkernplatine, verwendet werden.

Die Anordnung der Lichtquellen erfolgt auf der der Abdeckscheibe 22 abgewandten Seite des Abdeckrahmens 23. Die Enden 28,32 des Lichtleiters sind zumindest teilweise von dem Abdeckrahmen 23 bedeckt.

In einer bevorzugten Ausgestaltung sind die ersten Halbleiterlichtquellen dazu eingerichtet, Licht 16 der ersten Farbe zu emittieren, und die zweiten Halbleiterlichtquellen sind dazu eingerichtet, Licht 20 der zweiten Farbe zu emittieren. Diese Ausgestaltung hat den Vorteil besonders einfach zu sein und nur wenige Komponenten für die Erzeugung der unterschiedlichen Farben zu benötigen.

Der Lichtleiter 12 weist Lichtauskoppelelemente 48 und eine Lichtabstrahlfläche 36 auf. Der Lichtleiter 12 ist dazu eingerichtet, das Licht 16 der ersten Farbe und das Licht 20 der zweiten Farbe in die gleiche Richtung abzustrahlen.

Dabei wird unter einer Abstrahlung in die gleiche Richtung eine Abstrahlung verstanden, die zu einer im Wesentlichen gleichen geometrischen Lichtverteilung des Lichtes 16 des ersten Farbe und des Lichtes 20 der zweiten Farbe im Außenraum vor der Kraftfahrzeugbeleuchtungseinrichtung 10 führt.

In der dargestellten Ausgestaltung erfolgt die Auskopplung des abgestrahlten Lichtes 16, 20 über Prismen als Lichtauskoppelelemente 48. Als Lichtauskoppelelemente 48 kommen allgemein sowohl Erhebungen als auch Vertiefungen in einer Grenzfläche des Lichtleiters 12 in Frage. Die Erhebungen und Vertiefungen können prinzipiell sehr vielfältig geformt sein.

Diese Vielfalt ergibt sich daraus, dass die lichtleitende Wirkung von Lichtleitern bekanntlich auf einer internen Totalreflexion an einer Grenzfläche des Lichtleiters basiert. Die Lichtauskoppelelemente 48 zeichnen sich bekanntlich durch eine Geometrie aus, bei der aufgrund veränderter Winkel, mit der im Inneren des Lichtleiters propagierendes Licht auf eine Grenzfläche trifft keine Totalreflexion an der die Lichtabstrahlfläche 36 bildenden Grenzfläche mehr stattfindet und dort stattdessen zumindest ein Teil des einfallenden Lichtes durch die Grenzfläche ausgekoppelt wird.

Es versteht sich daher, dass an Stelle der Prismen Lichtauskoppelelemente 48 anderer Geometrie verwendet werden können. So kann eine Auskopplung z.B. auch durch Lichtauskoppelelemente 48 in Form von Stufen, schiefen Ebenen oder Linsenstrukturen erfolgen, wobei der Anteil der ausgekoppelten Strahlung durch die Form, Größe, Anzahl und Anordnung der Lichtauskoppelelemente 48 einstellbar ist.

Dazu können die Lichtauskoppelelemente 48 direkt in der Lichtabstrahlfläche 36 angeordnet sein. Im Rahmen von Ausgestaltungen der vorliegenden Erfindung ist jedoch bevorzugt, dass die Lichtauskoppelelemente 48 auf einer der Lichtabstrahlfläche 36 gegenüberliegenden Rückseite 50 des Lichtleiters 12 angeordnet sind.

Dies ist vorteilhaft, weil die Lichtabstrahlfläche 36 auf diese Weise glatt ausgestaltet werden kann, was das Erscheinungsbild verbessert. Damit verbunden ist der weitere Vorteil, dass die Geometrie der Lichtauskoppelelemente 48 auf der Rückseite 50 weniger ästhetischen Beschränkungen unterworfen ist, was zu einer weitergehenden Optimierung der Auskopplung genutzt werden kann.

Grundsätzlich wird bei der Auskopplung durch Lichtauskoppelelemente 48, die auf der der Lichtabstrahlseite 36 gegenüberliegenden Seite 50 angeordnet sind, eine Totalreflexion zur Änderung der Lichtstrahlrichtung benutzt. Dies stellt ein sehr effektives Verfahren dar mit dem sich vergleichsweise viel Licht aus dem Lichtleiter 12 auskoppeln lässt.

Der Lichtleiter 12 zeichnet sich im Übrigen in den bevorzugten Ausgestaltungen dadurch aus, dass seine Ausdehnung in einer zur Lichtabstrahlfläche 36 parallelen Richtung größer ist als ein Abstand der Lichtabstrahlfläche 36 zu der der Lichtabstrahlfläche 36 gegenüberliegenden Seite des Lichtleiters 12. Dies ist insbesondere bei sogenannten stabförmigen Lichtleitern und plattenförmigen Lichtleitern der Fall.

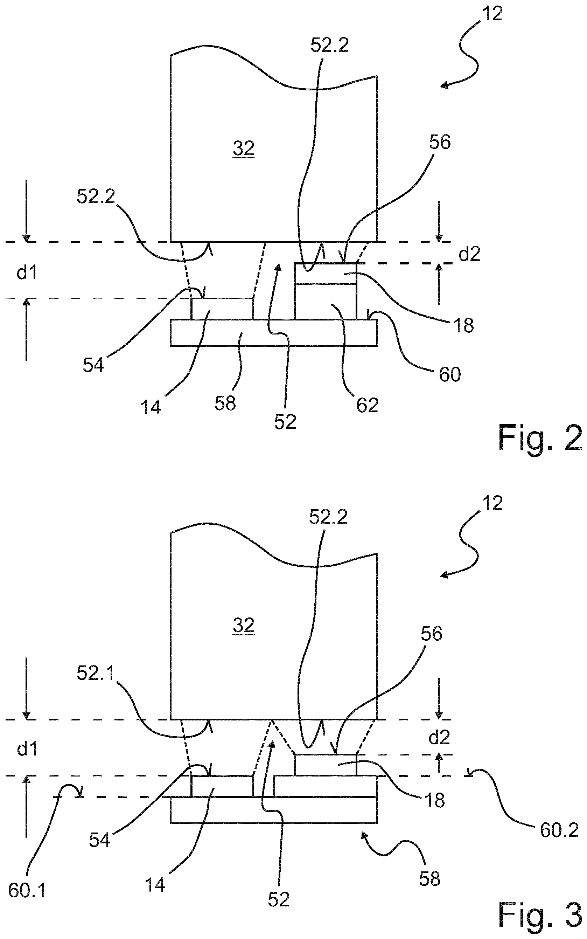

Die Figur 2 zeigt ein Ende 32 des Lichtleiters 12 der Kraftfahrzeugbeleuchtungseinrichtung 10 aus der Figur 1 für ein erstes Ausführungsbeispiel der Erfindung.

Der Lichtleiter 32 weist eine Lichteintrittsfläche 52 auf. Der Lichteintrittsfläche 52 gegenüber sind eine erste Halbleiterlichtquelle 14 und eine zweite Halbleiterlichtquelle 18 angeordnet.

Die erste Halbleiterlichtquelle 14 ist dazu eingerichtet, Licht für eine erste Lichtfunktion der Beleuchtungseinrichtung zu erzeugen. Die erste Lichtfunktion besteht zum Beispiel darin, eine Tagfahrlichtverteilung zu erzeugen. Dafür wird eine Halbleiterlichtquelle verwendet, die einen ausreichend großen Lichtstrom von weißem Licht erzeugt. Die erste Halbleiterlichtquelle besteht bevorzugt aus einer Leuchtdiode oder mehreren, gemeinsam betriebenen Leuchtdioden. Die erste Halbleiterlichtquelle 14 besitzt eine erste Lichtaustrittsfläche 54, die einem ersten Bereich 52.2 der Lichteintrittsfläche 52 des Lichtleiters 12 in einem ersten Abstand d1 gegenüberliegt.

Die zweite Halbleiterlichtquelle 18 ist dazu eingerichtet, Licht für eine zweite Lichtfunktion der Beleuchtungseinrichtung zu erzeugen. Die zweite Lichtfunktion besteht zum Beispiel darin, eine Blinklichtverteilung zu erzeugen. Dafür wird eine Halbleiterlichtquelle 18 verwendet, die einen ausreichend großen Lichtstrom von Licht aus dem gelben Spektralbereich erzeugt. Die zweite Halbleiterlichtquelle 18 besteht bevorzugt aus einer Leuchtdiode oder mehreren, gemeinsam betriebenen Leuchtdioden. Die zweite Halbleiterlichtquelle 18 besitzt eine zweite Lichtaustrittsfläche 56, die einem zweiten Bereich 52.2 der Lichteintrittsfläche 52 des Lichtleiters 12 in einem zweiten Abstand d2 gegenüberliegt. Dabei ist der zweite Abstand d2 kleiner als der erste Abstand d1.

Die Lichteintrittsfläche 52 des Endes 32 des Lichtleiters 12 ist bei dieser Ausgestaltung eine ebene Fläche. Daher liegt der erste Bereich 52.1 der Lichteintrittsfläche 52 mit dem zweiten Bereich 52.2 der Lichteintrittsfläche 52 in einer gemeinsamen Ebene.

Die erste Halbleiterlichtquelle 14 und die zweite Halbleiterlichtquelle 18 weisen die gleiche Bauhöhe auf, und die Leiterplatte 58, auf der die erste Halbleiterlichtquelle 14 und die zweite Halbleiterlichtquelle 18 angeordnet sind, ist eine ebene Leiterplatte 58, deren Oberfläche 60, die der Lichteintrittsfläche 52 des Lichtleiters 12 zugewandt ist, parallel zu der Lichteintrittsfläche 52 des Endes 32 des Lichtleiters 12 ist.

Der Unterschied in den Abständen d1 und d2 wird bei diesem Ausführungsbeispiel dadurch erzeugt, dass die erste Halbleiterlichtquelle 14 direkt auf der Oberfläche 60 der Leiterplatte 58 befestigt ist und die zweite Halbleiterlichtquelle 18 über eine zwischen der zweiten Halbleiterlichtquelle 18 und der Oberfläche 60 der Leiterplatte 58 angeordnete Unterlage 62 auf der Leiterplatte 58 befestigt ist.

Die Unterlage 62 weist bevorzugt einen Metallkern auf, um einen gute Abfluss von Wärme aus dem Chip der Halbleiterlichtquelle 18 zur Leiterplatte 58 zu ermöglichen, so dass die Unterlage 62 nicht zu einer Chip-Temperatur führt, die merklich höher ist als eine Chip-Temperatur, die sich unter sonst gleichen Bedingungen dann einstellen würde, wenn die zweite Halbleiterlichtquelle 18 ohne Unterlage 62 direkt auf der Oberfläche 60 der Leiterplatte 58 befestigt wäre.

Die Figur 3 zeigt ein Ende 32 des Lichtleiters 12 der Kraftfahrzeugbeleuchtungseinrichtung 10 aus der Figur 1 für ein zweites Ausführungsbeispiel der Erfindung.

Der Lichtleiter 32 weist eine Lichteintrittsfläche 52 auf. Der Lichteintrittsfläche 52 gegenüber sind eine erste Halbleiterlichtquelle 14 und eine zweite Halbleiterlichtquelle 18 angeordnet.

Die erste Halbleiterlichtquelle 14 besitzt eine erste Lichtaustrittsfläche 54, die einem ersten Bereich 52.1 der Lichteintrittsfläche 52 des Lichtleiters 12 in einem ersten Abstand d1 gegenüberliegt. Die erste Halbleiterlichtquelle 14 ist dazu eingerichtet, Licht für eine erste Lichtfunktion der Beleuchtungseinrichtung zu erzeugen. Die erste Lichtfunktion besteht zum Beispiel darin, eine Tagfahrlichtverteilung zu erzeugen. Dafür wird eine Halbleiterlichtquelle verwendet, die einen ausreichend großen Lichtstrom von weißem Licht erzeugt. Die erste Halbleiterlichtquelle besteht bevorzugt aus einer Leuchtdiode oder mehreren, gemeinsam betriebenen Leuchtdioden.

Die zweite Halbleiterlichtquelle 18 besitzt eine zweite Lichtaustrittsfläche 56, die einem zweiten Bereich 52.2 der Lichteintrittsfläche 52 des Lichtleiters 12 in einem zweiten Abstand d2 gegenüberliegt. Dabei ist der zweite Abstand d2 kleiner als der erste Abstand d1. Die zweite Halbleiterlichtquelle 18 ist dazu eingerichtet, Licht für eine zweite Lichtfunktion der Beleuchtungseinrichtung zu erzeugen.

Die zweite Lichtfunktion besteht zum Beispiel darin, eine Blinklichtverteilung zu erzeugen. Dafür wird eine Halbleiterlichtquelle 18 verwendet, die einen ausreichend großen Lichtstrom von Licht aus dem gelben Spektralbereich erzeugt. Die zweite Halbleiterlichtquelle 18 besteht bevorzugt aus einer Leuchtdiode oder mehreren, gemeinsam betriebenen Leuchtdioden.

Die Lichteintrittsfläche 52 des Endes 32 des Lichtleiters 12 ist bei dieser Ausgestaltung eine ebene Fläche. Daher liegt der erste Bereich 52.1 der Lichteintrittsfläche 52 mit dem zweiten Bereich 52.2 der Lichteintrittsfläche 52 in einer gemeinsamen Ebene. Die erste Halbleiterlichtquelle 14 und die zweite Halbleiterlichtquelle 18 weisen die gleiche Bauhöhe auf.

Im Unterschied zum ersten Ausführungsbeispiel weist eine der Lichteintrittsfläche 52 des Endes 32 des Lichtleiters 12 zugewandte Oberfläche der Leiterplatte 58 eine erste Teilebene 60.1 und eine zweite Teilebene 60.2 auf. Die zweite Teilebene 60.2 befindet sich in der Richtung, in der die Lichteintrittsfläche 52 des Lichtleiters 12, von der Leiterplatte 68 aus betrachtet, vor der Leiterplatte 58 liegt, weiter vorn als die erste Teilebene 60.1.

Der Unterschied in den Abständen d1 und d2 wird bei diesem Ausführungsbeispiel dadurch erzeugt, dass die erste Halbleiterlichtquelle 14 auf der ersten Teilebene 60.1 befestigt ist und dass die zweite Halbleiterlichtquelle 60.2 auf der zweiten Teilebene 60.2 befestigt ist. Die der Lichteintrittsfläche 52 des Lichtleiters 12 zugewandten Teilebenen 60.1 und 60.2 sind parallel zu der Lichteintrittsfläche 52 des Endes 32 des Lichtleiters 12.

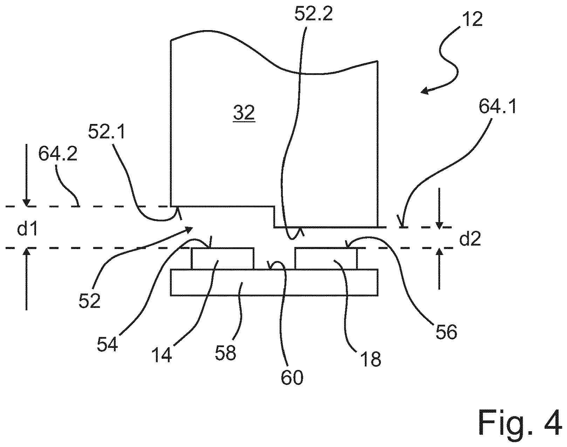

Die Figur 4 zeigt ein Ende 32 des Lichtleiters 12 der Kraftfahrzeugbeleuchtungseinrichtung 10 aus der Figur 1 für ein drittes Ausführungsbeispiel der Erfindung.

Der Lichtleiter 32 weist eine Lichteintrittsfläche 52 auf. Der Lichteintrittsfläche 52 gegenüber sind eine erste Halbleiterlichtquelle 14 und eine zweite Halbleiterlichtquelle 18 angeordnet.

Die erste Halbleiterlichtquelle 14 ist dazu eingerichtet, Licht für eine erste Lichtfunktion der Beleuchtungseinrichtung zu erzeugen. Die erste Lichtfunktion besteht zum Beispiel darin, eine Tagfahrlichtverteilung zu erzeugen. Dafür wird eine Halbleiterlichtquelle verwendet, die einen ausreichend großen Lichtstrom von weißem Licht erzeugt. Die erste Halbleiterlichtquelle besteht bevorzugt aus einer Leuchtdiode oder mehreren, gemeinsam betriebenen Leuchtdioden.

Die erste Halbleiterlichtquelle 14 besitzt eine erste Lichtaustrittsfläche 54, die einem ersten Bereich 52.1 der Lichteintrittsfläche 52 des Lichtleiters 12 in einem ersten Abstand d1 gegenüberliegt. Die zweite Halbleiterlichtquelle 18 ist dazu eingerichtet, Licht für eine zweite Lichtfunktion der Beleuchtungseinrichtung zu erzeugen. Die zweite Lichtfunktion besteht zum Beispiel darin, eine Blinklichtverteilung zu erzeugen. Dafür wird eine Halbleiterlichtquelle 18 verwendet, die einen ausreichend großen Lichtstrom von Licht aus dem gelben Spektralbereich erzeugt. Die zweite Halbleiterlichtquelle 18 besteht bevorzugt aus einer Leuchtdiode oder mehreren, gemeinsam betriebenen Leuchtdioden.

Die zweite Halbleiterlichtquelle 18 besitzt eine zweite Lichtaustrittsfläche 56, die einem zweiten Bereich 52.2 der Lichteintrittsfläche 52 des Lichtleiters 12 in einem zweiten Abstand d2 gegenüberliegt. Dabei ist der zweite Abstand d2 kleiner als der erste Abstand d1.

Bei diesem Ausführungsbeispiel liegt der erste Bereich 52.2 der Lichteintrittsfläche 52 des Lichtleiters 12 in einer ersten Ebene 64.1 der Lichteintrittsfläche, und der zweite Bereich 52.2 der Lichteintrittsfläche 52 des Lichtleiters 12 liegt in einer zweiten Ebene 64.2 der Lichteintrittsfläche, die von der ersten Ebene 64.1 verschieden. Beide Ebenen 64.1, 64.2 sind bevorzugt parallel zueinander und auch parallel zu der ihnen zugewandten Oberfläche der Leiterplatte 58

Die erste Halbleiterlichtquelle 14 und die zweite Halbleiterlichtquelle 18 weisen die gleiche Bauhöhe auf, und die Leiterplatte 58, auf der die erste Halbleiterlichtquelle 14 und die zweite Halbleiterlichtquelle 18 angeordnet sind, ist eine ebene Leiterplatte 58, deren Oberfläche 60, die der Lichteintrittsfläche 52 des Lichtleiters 12 zugewandt ist, parallel zu der Lichteintrittsfläche 52 des Endes 32 des Lichtleiters 12 ist.

Der Unterschied in den Abständen d1 und d2 wird bei diesem Ausführungsbeispiel dadurch erzeugt, dass ein der zweiten Halbleiterlichtquelle 18 zugewandter zweiter Bereich 52.2 der Lichteintrittsfläche 52 des Lichtleiters 12 weiter aus dem übrigen Lichtleiter 12 herausragt als ein der ersten Halbleiterlichtquelle 14 zugewandter erster Bereich 52.2 der Lichteintrittsfläche 52.

Eine weitere bevorzugte Ausgestaltung zeichnet sich dadurch aus, dass die erste Halbleiterlichtquelle eine in der Lichtabstrahlrichtung von einer Bauhöhe der zweiten Halbleiterlichtquelle verschiedene Bauhöhe aufweist.

Erfindungsgemäß dient die erste Halbleiterlichtquelle zur Erzeugung einer ersten Lichtverteilung, mit der die erste Lichtfunktion erfüllt wird und die zweite Halbleiterlichtquelle dient zur eugung einer zweiten Lichtverteilung, mit der die zweite Lichtfunktion erfüllt wird.

Eine erfindungsgemäße Ausgestaltung zeichnet sich dadurch aus, dass der Abstand derjenigen Lichtaustrittsfläche der kleinere Abstand ist, deren zugehörige Halbleiterlichtquelle der Erzeugung derjenigen Lichtverteilung dient, bei deren Erzeugung im zeitlichen Mittel weniger Wärme in der zugehörigen Halbleiterlichtquelle frei wird.

Bevorzugt ist es, ciuoh dass die erste Lichtverteilung eine Tagfahrlichtverteilung ist und die zweite Lichtverteilung eine Blinklichtverteilung ist.

## Patentansprüche

1. Beleuchtungseinrichtung (10) für ein Kraftfahrzeug, mit einem Lichtleiter (12), der eine Lichteintrittsfläche (52) aufweist, und mit wenigstens einer ersten Halbleiterlichtquelle (14), die Licht für eine erste Lichtfunktion der Beleuchtungseinrichtung erzeugt und die eine erste Lichtaustrittsfläche (54) besitzt, die einem ersten Bereich (52.1) der Lichteintrittsfläche (52) in einem ersten Abstand (d1) gegenüberliegt, und mit wenigstens einer zweiten Halbleiterlichtquelle (18), die Licht für eine zweite Lichtfunktion der Beleuchtungseinrichtung erzeugt und die eine zweite Lichtaustrittsfläche (56) aufweist, die einem zweiten Bereich (52.2) der Lichteintrittsfläche (52) in einem zweiten Abstand (d2) gegenüberliegt, wobei der erste Abstand (d1) von dem zweiten Abstand (d2) verschieden ist, und wobei die erste Halbleiterlichtquelle (14) zur Erzeugung einer ersten Lichtverteilung dient, mit der die erste Lichtfunktion erfüllt wird und dass die zweite Halbleiterlichtquelle (18) zur Erzeugung einer zweiten Lichtverteilung dient, mit der die zweite Lichtfunktion erfüllt wird, **dadurch gekennzeichnet, dass** der Abstand derjenigen Lichtaustrittsfläche der kleinere Abstand ist, deren zugehörige Halbleiterlichtquelle der Erzeugung derjenigen Lichtverteilung dient, bei deren Erzeugung im zeitlichen Mittel weniger Wärme in der zugehörigen Halbleiterlichtquelle frei wird.

2. Beleuchtungseinrichtung (10) nach Anspruch 1, **dadurch gekennzeichnet, dass** der erste Bereich (52.1) der Lichteintrittsfläche (52) mit dem zweiten Bereich (52.2) der Lichteintrittsfläche (52) in einer gemeinsamen Ebene liegt.

3. Beleuchtungseinrichtung (10) nach Anspruch 2, **dadurch gekennzeichnet, dass** die erste Halbleiterlichtquelle (14) und die zweite Halbleiterlichtquelle (18) auf einer ebenen Leiterplatte (58) angeordnet sind und dass die erste Halbleiterlichtquelle )14) direkt auf der Leiterplatte (58) befestigt ist und die zweite Halbleiterlichtquelle (18) über eine zwischen der zweiten Halbleiterlichtquelle (18) und der Leiterplatte (58) angeordnete Unterlage (62) auf der Leiterplatte (58) befestigt ist.

4. Beleuchtungseinrichtung (10) nach Anspruch 2, **dadurch gekennzeichnet, dass** eine der Lichteintrittsfläche (52) zugewandte Oberfläche (60) der Leiterplatte (58) eine erste Teilebene (60.1) und eine zweite Teilebene (60.2) aufweist, wobei sich die zweite Teilebene (60.2) in der Richtung, in der die Lichteintrittsfläche (52) des Lichtleiters (12), von der Leiterplatte (58) aus betrachtet, vor der Leiterplatte (58) liegt, weiter vorn befindet als die erste Teilebene (60.1), und dass die erste Halbleiterlichtquelle (14) auf der ersten Teilebene (60.1) befestigt ist und die zweite Halbleiterlichtquelle (18) auf der zweiten Teilebene (60.2) befestigt ist.

5. Beleuchtungseinrichtung (10) nach einem der vorhergehenden Ansprüche, **dadurch gekennzeichnet, dass** die erste Halbleiterlichtquelle (14) eine in der Lichtabstrahlrichtung von einer Bauhöhe der zweiten Halbleiterlichtquelle (18) verschiedene Bauhöhe aufweist.

6. Beleuchtungseinrichtung (10) nach Anspruch 1, **dadurch gekennzeichnet, dass** der erste Bereich (52.1) der Lichteintrittsfläche (52) des Lichtleiters (12) und der zweite Bereich (52.2) der Lichteintrittsfläche (52) des Lichtleiters (12) nicht in einer Ebene liegen und dass ein der zweiten Halbleiterlichtquelle (18) zugewandter zweiter Bereich (52.2) der Lichteintrittsfläche (52) weiter aus dem übrigen Lichtleiter (12) herausragt als ein der ersten Halbleiterlichtquelle (14) zugewandter erster Bereich (52.1) der Lichteintrittsfläche (52).

7. Beleuchtungseinrichtung (10) nach Anspruch 1, **dadurch gekennzeichnet, dass** die erste Lichtverteilung eine Tagfahrlichtverteilung ist und die zweite Lichtverteilung eine Blinklichtverteilung ist.

## Claims

1. Lighting device (10) for a motor vehicle, having a light guide (12) which has a light entry surface (52), and having at least one first semiconductor light source (14) which generates light for a first light function of the lighting device and which has a first light exit surface (54) which is opposite a first region (52.1) of the light entry surface (52) at a first distance (d1), and having at least one second semiconductor light source (18) which generates light for a second light function of the lighting device and which has a second light exit surface (56) which is opposite a second region (52.2) of the light entry surface (52) at a second distance (d2), the first distance (d1) being different from the second distance (d2), and the first semiconductor light source (14) being used to generate a first light distribution with which the first light function is fulfilled, and the second semiconductor light source (18) being used to generate a second light distribution with which the second light function is fulfilled, **characterized in that** the distance of that light exit surface is the smaller distance whose associated semiconductor light source serves to generate that light distribution during the generation of which less heat is released on a time-average basis in the associated semiconductor light source.

2. Lighting device (10) according to claim 1, **characterised in that** the first region (52.1) of the light entry surface (52) lies in a common plane with the second region (52.2) of the light entry surface (52).

3. Lighting device (10) according to claim 2, **characterized in that** the first semiconductor light source (14) and the second semiconductor light source (18) are arranged on a planar printed circuit board (58), and **in that** the first semiconductor light source (14) is fixed directly to the printed circuit board (58) and the second semiconductor light source (18) is fixed to the printed circuit board (58) via a base (62) arranged between the second semiconductor light source (18) and the printed circuit board (58).

4. Lighting device (10) according to claim 2, **characterized in that** a surface (60) of the printed circuit board (58) facing the light entry surface (52) has a first partial plane (60.1) and a second partial plane (60.2), the second partial plane (60. 2) being located further forward than the first partial plane (60.1) in the direction in which the light entry surface (52) of the light guide (12) lies in front of the printed circuit board (58) as viewed from the printed circuit board (58), and **in that** the first semiconductor light source (14) is mounted on the first partial plane (60.1) and the second semiconductor light source (18) is mounted on the second partial plane (60.2).

5. Lighting device (10) according to one of the preceding claims, **characterized in that** the first semiconductor light source (14) has a height which differs in the light emission direction from a height of the second semiconductor light source (18).

6. Lighting device (10) according to claim 1, **characterized in that** the first region (52.1) of the light entry surface (52) of the light guide (12) and the second region (52.2) of the light entry surface (52) of the light guide (12) do not lie in one plane, and **in that** a second region (52. 2) of the light entry surface (52) facing the second semiconductor light source (18) projects further out of the rest of the light guide (12) than a first region (52.1) of the light entry surface (52) facing the first semiconductor light source (14).

7. Lighting device (10) according to claim 1, **characterised in that** the first light distribution is a daytime running light distribution and the second light distribution is a turn-signal light distribution.

## Revendications

1. Dispositif d'éclairage (10) pour un véhicule à moteur, avec un guide de lumière (12), qui présente une surface d'entrée de lumière (52), et avec au moins une première source de lumière à semi-conducteur (14), qui produit de la lumière pour une première fonction de lumière du dispositif d'éclairage et qui possède une première surface de sortie de lumière (54), qui est opposée à une première zone (52.1) de la surface d'entrée de lumière (52) selon une première distance (d1), et avec au moins une deuxième source de lumière à semi-conducteur (18), qui produit de la lumière pour une deuxième fonction de lumière du dispositif d'éclairage et qui présente une deuxième surface de sortie de lumière (56), qui est opposée à une deuxième zone (52.2) de la surface d'entrée de lumière (52) selon une deuxième distance (d2), dans lequel la première distance (d1) est différente de la deuxième distance (d2), et dans lequel la première source de lumière à semi-conducteur (14) sert à produire une première distribution de lumière, avec laquelle la première fonction de lumière est remplie et que la deuxième source de lumière à semi-conducteur (18) sert à produire une deuxième distribution de lumière, avec laquelle la deuxième fonction de lumière est remplie, **caractérisé en ce que** la distance de la surface de sortie de lumière dont la source de lumière à semi-conducteur associée sert à la production de la distribution de lumière, pour la production de laquelle moins de chaleur se dégage dans la source de lumière à semi-conducteur associée en moyenne temporelle, est la distance la plus petite.

2. Dispositif d'éclairage (10) selon la revendication 1, **caractérisé en ce que** la première zone (52.1) de la surface d'entrée de lumière (52) se situe avec la deuxième zone (52.2) de la surface d'entrée de lumière (52) dans un plan commun.

3. Dispositif d'éclairage (10) selon la revendication 2, **caractérisé en ce que** la première source de lumière à semi-conducteur (14) et la deuxième source de lumière à semi-conducteur (18) sont disposées sur une carte de circuits imprimés (58) plate et que la première source de lumière à semi-conducteur (14) est fixée directement sur la carte de circuits imprimés (58) et la deuxième source de lumière à semi-conducteur (18) est fixée sur la carte de circuits imprimés (58) par l'intermédiaire d'un support (62) disposé entre la deuxième source de lumière à semi-conducteur (18) et la carte de circuits imprimés (58) .

4. Dispositif d'éclairage (10) selon la revendication 2, **caractérisé en ce qu'**une surface (60) de la carte de circuits imprimés (58) tournée vers la surface d'entrée de lumière (52) présente un premier plan partiel (60.1) et un deuxième plan partiel (60.2), dans lequel le deuxième plan partiel (60.2) dans la direction dans laquelle la surface d'entrée de lumière (52) du guide de lumière (12), observée à partir de la carte de circuits imprimés (58), se situe devant la carte de circuits imprimés (58), se trouve davantage à l'avant que le premier plan partiel (60.1), et que la première source de lumière à semi-conducteur (14) est fixée sur le premier plan partiel (60.1) et la deuxième source de lumière à semi-conducteur (18) est fixée sur le deuxième plan partiel (60.2).

5. Dispositif d'éclairage (10) selon l'une quelconque des revendications précédentes, **caractérisé en ce que** la première source de lumière à semi-conducteur (14) présente une hauteur de construction différente d'une hauteur de construction de la deuxième source de lumière à semi-conducteur (18) dans la direction d'émission de lumière.

6. Dispositif d'éclairage (10) selon la revendication 1, **caractérisé en ce que** la première zone (52.1) de la surface d'entrée de lumière (52) du guide de lumière (12) et la deuxième zone (52.2) de la surface d'entrée de lumière (52) du guide de lumière (12) ne se situent pas dans un plan et qu'une deuxième zone (52.2) de la surface d'entrée de lumière (52) tournée vers la deuxième source de lumière à semi-conducteur (18) fait davantage saillie du reste du guide de lumière (12) qu'une première zone (52.1) de la surface d'entrée de lumière (52) tournée vers la première source de lumière à semi-conducteur (14) .

7. Dispositif d'éclairage (10) selon la revendication 1, **caractérisé en ce que** la première distribution de lumière est une distribution de lumière diurne et la deuxième distribution de lumière est une distribution de lumière clignotante.
